# EUROPÄISCHE PATENTSCHRIFT

(11) **EP 0 963 702 B1**
(45) Veröffentlichungstag und Bekanntmachung des Hinweises auf die Patenterteilung: **18.12.2002**
(21) Anmeldenummer: 99110613.9
(22) Anmeldetag: 02.06.1999
(51) Int. Cl.: A23K 1/00

(54) **Wirkstoffkonzentrat**
Active agent concentrate
Concentré d'agent actif

(30) Priorität: 09.06.1998 DE 19825687
(43) Veröffentlichungstag der Anmeldung: 15.12.1999
(73) Patentinhaber: Degussa AG, 40474 Düsseldorf (DE)
(72) Erfinder: Grinschgl, Brigitte, 63110 Rodgau (DE); Oelmüller, Rolf, 63454 Hanau (DE)

(56) Entgegenhaltungen:
- EP-A- 0 253 212
- WO-A-96/29886
- WO-A-96/32949
- WO-A-99/07237
- DE-A- 2 209 477
- DE-A- 4 218 768

## Beschreibung

Die Erfindung betrifft ein Wirkstoffkonzentrat, das Verfahren zu seiner Herstellung und seine Verwendung.

Es ist bekannt, Mischungen aus Cholinchlorid und Fällungskieselsäure herzustellen, indem man eine wäßrige Lösung von Cholinchlorid zusammen mit wenigstens 2 % hydrophiler Kieselsäure und wenigstens etwa 3 % hydrophobierter Kieselsäure mischt, wobei jedoch der Mischvorgang beendet wird, solange nach einer Unterbrechung der Mischbewegung Kieselsäure noch an die Oberfläche der Mischung aufsteigt, und anschließend diese Mischung sprühtrocknet (DE-A 22 09 477).

Das bekannte Gemisch aus Fällungskieselsäure und wäßriger Cholinchloridlösung hat den Nachteil, daß eine ausreichende Lagerstabilität ohne Beeinträchtigung der Fließfähigkeit nicht gegeben ist.

Es ist weiterhin bekannt, Cholinchlorid enthaltende Pulver herzustellen, indem man eine wäßrige Cholinchloridlösung in einem Sprühturm versprüht, wobei in dem Sprühturm eine Wolke aus feinverteilter hydrophober Fällungskieselsäure (SIPERNAT D17 der Firma Degussa AG) vorhanden ist. Dabei wird die hyrophobe Fällungskieselsäure auf der Oberfläche der Cholinchloridteilchen aufgebracht. Das erhaltene Produkt wird in einem Wirbelschichttrockner getrocknet. Es weist einen Wirkstoffgehalt von 95,8 Gew.-% auf (DE-A 42 18 768).

Aus WO 96/29886 ist bekannt, wie eine hydrophile Kieselsäure mit Cholinchlorid in Anwesenheit z. B. einer Fettsäure beschickt werden kann.

Das bekannte Cholinchlorid enthaltende Pulver hat den Nachteil, dass es nur wenige Tage lagerstabil ist. Bereits nach 24 Stunden tritt Wasser aus.

Es besteht somit die Aufgabe, eine Mischung aus Siliciumdioxid-Varianten und Wirkstofflösung, insbesondere wäßriger Cholinchloridlösung, die über einen längeren Zeitraum lagerstabil und fließfähig bleibt, herzustellen.

Gegenstand der Erfindung ist ein Wirkstoffkonzentrat, welches gekennzeichnet ist durch:

| | |
|---|---|
| Wirkstoff | 85 bis 98 Gew.-%, vorzugsweise 93 bis 97 Gew.-% |
| | |
| Hydrophobe Siliciumdioxid-Variante | 2 bis 15 Gew.-%, vorzugsweise 3 bis 7 Gew.-% |
| | |
| Wasser (bei Austrag aus dem Trockner) | maximal 0,5 Gew.-% |
| | |
| Lagerstabilität | mindestens 1,5 Jahre bei einem Äquilibriumwassergehalt |

Frei fließendes Pulver.

Als Siliciumdioxid-Variante können Fällungskieselsäuren, pyrogen hergestellte Kieselsäuren und/oder Silikate eingesetzt werden.

Die Stoffe sind bekannt aus Ullmann's Enzyklopädie der technischen Chemie, Band 21, 4. Auflage, Seiten 462 bis 476 (1982).

In einer bevorzugten Ausführungsform der Erfindung kann das Wirkstoffkonzentrat als Wirkstoff Cholinchlorid enthalten.

Weitere Wirkstoffe können hygroskopische Substanzen aus dem Lebensmittelbereich, wie zum Beispiel hydrolysiertes Pflanzenprotein, hygroskopische Substanzen aus dem Futtermittelbereich, wie zum Beispiel Eisensulfat, sein.

Ein weiterer Gegenstand der Erfindung ist ein Verfahren zur Herstellung des Wirkstoffkonzentrates, welches dadurch gekennzeichnet ist, daß man zuerst eine Masterbatch-Suspension mit einem Gehalt an 10 bis 15 Gew.-% hydrophober Siliciumdioxid-Variante, insbesondere mit der hydrophoben Fällungskieselsäure Sipernat D10, und 85 bis 90 Gew.-% an 40 bis 80 %iger wäßriger Wirkstofflösung, insbesondere 70 bis 80 %iger wäßriger Cholinchloridlösung, durch Mischen der Bestandteile in Form einer Umkehremulsion, beispielsweise mit einer Dissolverscheibe, die die Suspension in Bewegung hält, und/oder intensivem Mischen mit einer Perlmühle mit Kühlung (Dyno-Mill), herstellt, diese Masterbatch-Suspension gegebenenfalls mit Wasser oder weiterer wäßriger Wirkstofflösung verdünnt und anschließend mittels einer bekannten Vorrichtung sprühtrocknet.

Mit besonderem Vorteil kann man eine Mischvorrichtung einsetzen, die das zu vermischende Gut einer Zwangszuführung unterwirft und eine hohe Scherwirkung entwickelt.

Als hydrophobe Fällungskieselsäuren können Fällungskieselsäuren, die nach bekannten Verfahren hydrophobiert werden, eingesetzt werden.

Bevorzugt kann die hydrophobierte Fällungskieselsäure SIPERNAT D10 eingesetzt werden. Diese Fällungskieselsäure ist durch die folgenden physikalisch-chemischen Kenndaten gekennzeichnet:

| | | SIPERNAT D10 (hydrophob) |
|---|---|---|
| Aussehen | | lockeres weißes Pulver |
| Oberfläche nach BET ¹⁾ | m²/g | 90 |
| Mittlere Teilchengröße | µm | 5 |
| Stampfdichte ²⁾ | g/l | 100 |
| Trocknungsverlust ³⁾ (2 h bei 105 °C) | % | 3 |
| Glühverlust ⁴⁾⁸⁾(2 h bei 1000 °C) | % | 7 ⁹⁾ |
| pH-Wert ⁵⁾ (in 5 %iger Dispersion) | | 10,3 ¹⁰⁾ |
| SiO₂ ⁷⁾ | % | 98 |
| Na₂O ⁷⁾ | % | 1,0 |
| SO₃ | % | 0,8 |
| C ⁷⁾ | % | 3,0 |
| Methanolbenetzbarkeit | % | ca. 60 |
| Siebrückstand ⁶⁾ (nach Mocker, 45 µm) | % | 0,01 |

| | | |
|---|---|---|
| ¹⁾ nach ISO 5794/1 | | |
| ²⁾ nach DIN ISO 787/11, JIS K 5101/21 nicht gesiebt | | |
| ³⁾ nach DIN ISO 787/2, ASTM D 280, JIS K 5101/21 | | |
| ⁴⁾ nach ISO 3262/11, ASTM D 1208, JIS K 5101/23 | | |
| ⁵⁾ nach DIN ISO 787/9, ASTM D 1208, JIS K 5101/24 | | |
| ⁶⁾ nach DIN ISO 787/18, JIS K 5101/20 | | |
| ⁷⁾ bezogen auf die 2 Stunden bei 1000 °C geglühte Substanz | | |
| ⁸⁾ bezogen auf die 2 Stunden bei 105 °C getrocknete Substanz | | |
| ⁹⁾ enthält ca. 3 % chemisch gebundenen Kohlenstoff | | |
| ¹⁰⁾ in Wasser : Methanol 1 : 1 | | |

Anstelle der hydrophoben Fällungskieselsäure können auch hydrophobe, pyrogen hergestellte Kieselsäuren oder hydrophobe Silikate eingesetzt werden.

Das Mischen der Bestandteile zur Herstellung der Masterbatch-Suspension erfolgt mit Scherkräften, die es erlauben, eine Phasenumkehr, das heißt, eine Umbenetzung der Oberfläche der Fällungskieselsäure, zu erzielen. Diese Phasenumkehr bedeutet eine vollständige Benetzung der hydrophoben Fällungskieselsäure mit der wäßrigen Wirkstofflösung ohne Zusatz von Netzmitteln.

Das Vormischen kann vorzugsweise mittels einer Dissolverscheibe, die endgültige Herstellung eines Prämixes insbesondere mittels einer Perlmühle, durchgeführt werden. Die Trocknung erfolgt vorzugsweise durch Sprühtrocknung.

Das erfindungsgemäße Wirkstoffkonzentrat weist die folgenden Vorteile auf:

Bei der Lagerung tritt trotz maximaler Gewichtszunahme von 33 % Feuchte aus der Luft keine Änderung der physikalischen Eigenschaften, wie Lagerstabilität, Korngröße oder Fließfähigkeit, ein. Die maximale Wasseraufnahme ist dabei abhängig von der Luftfeuchtigkeit. Es handelt sich hierbei um einen Äquilibriumsgehalt.

Das erfindungsgemäße Wirkstoffkonzentrat kann zur Herstellung von Prämixen und Mischfuttern verwendet werden, wobei es als Futtersupplement dient.

### Beispiel 1

### Herstellung eines lagerstabilen 95 %igen Cholinchloridpulvers

### a) Herstellung einer Masterbatch-Suspension

Eine Einwaage von 85 Gewichtsteilen einer 75 %igen Cholinchloridlösung und 15 Gewichtsteilen Sipernat D10 wird in einem hochscherenden Mischaggregat mit Kühlung (Analysenmühle mit Wasserkühlung, Durchmesser 6 cm; Messer 5,5 cm; 20.000 Upm) so lange gemischt, bis sich eine pastöse homogene Suspension gebildet hat. Das Ende des Mischvorganges ist dann erreicht, wenn eine Phasenumkehr eingetreten ist und kein Sipernat D10 mehr aufschwimmt.

Die so erhaltene Suspension läßt sich sowohl mit 75 %iger Cholinchloridlösung als auch mit Wasser zu jeder gewünschten Konzentration verdünnen.

### b) Herstellung des 95 %igen Cholinchloridpulvers

Zu einer Einwaage von 100 Gewichtsteilen des Masterbatches (85/15) werden 295 Gewichtsteile einer 75 %igen Cholinchloridlösung zugesetzt und mit einem niedrigscherenden Mischaggregat (Labor: zum Beispiel Flügelrührer, Magnetrührer) vermischt. Die so entstandene Verdünnung enthält eine Sipernat D10-Konzentration von 3,8 %. Sofern sich die Suspension aufgrund der Viskosität nicht pumpen oder versprühen läßt, kann mit Wasser weiterverdünnt werden.

Die so erhaltene Suspension wird im Sprühtrockner mit getrockneter Luft oder unter N₂-Atmosphäre versprüht.

Das Endprodukt ist ein trockenes und lagerstabiles 95 %iges Cholinchloridpulver.

### Beispiel 2

### Herstellung eines lagerstabilen 95 %igen Cholinchloridpulvers

### a) Herstellung einer Masterbatch-Suspension

Eine Einwaage von 90 Gewichtsteilen einer 75 %igen Cholinchloridlösung wird in einer Perlmühle mit Kühlung (Typ "Dyno Mill", kontinuierliche Arbeitsweise mit 2.000 Upm, Ausgangsspalt 0,3 mm, Mischbehälter 300 ml, Glasperlen 1 mm Durchmesser, Flügelscheibe 8 cm Durchmesser) unter Dosierung von 10 Gewichtsteilen Sipernat D10 zu einer pastösen homogenen Suspension verarbeitet. Es kann auch in einem Batchverfahren gearbeitet werden, indem man das Sipernat D10
a) in den Austauschbehälter dosiert, wobei die Suspension laufend mit einer Dissolverscheibe vorgemischt wird.
b) durch eine zweite Öffnung direkt in die durchlaufende Suspension dosiert.

Das Ende des Mischvorganges ist dann erreicht, wenn eine Phasenumkehr eingetreten ist und kein Sipernat D10 mehr aufschwimmt.

Die so erhaltene Suspension läßt sich sowohl mit 75 %iger Cholinchloridlösung als auch mit Wasser mit einem einfachen Mischaggregat (zum Beispiel Propellerrührer) zu jeder gewünschten Konzentration verdünnen.

### b) Herstellung des 95 %igen Cholinchloridpulvers

Zu einer Einwaage von 100 Gewichtsteilen des Masterbatches (90/10) werden 163 Gewichtsteile einer 75 %igen Cholinchloridlösung dosiert und mit einem niedrigscherenden Mischaggregat (zum Beispiel Propellerrührer) vermischt. Die so entstandene Verdünnung enthält eine Sipernat D10-Konzentration von 3,8 %. Sofern sich die Suspension aufgrund der Viskosität nicht pumpen oder versprühen läßt, kann mit Wasser weiterverdünnt werden.

Die so erhaltene Suspension wird im Sprühtrockner mit getrockneter Luft oder unter N₂-Atmosphäre versprüht.

Das Endprodukt ist ein trockenes und lagerstabiles 95 %iges Cholinchloridpulver.

Mit diesem Cholinchloridpulver wird die offene Lagerung bei Raumtemperatur und 50 bis 80 % relative Feuchte durchgeführt. Die Ergebnisse dieser Lagerung sind in der Tabelle 1 aufgeführt.

**Tabelle 1**

| Offene Lagerung bei RT und 50 - 80 % rel. Feuchte | | |
|---|---|---|
| **Lagerzeit** | **Fließnote** | **Schüttkegelhöhe** |
| 1 Tag | 1 | 12 mm |
| 2 Tage | 1 | 12 mm |
| 3 Tage | 1 | 11 mm |
| 1 Woche | 1 | 11 mm |
| 2 Wochen | 1 | 11 mm |
| 3 Wochen | 1 | 11 mm |
| 4 Wochen | 1 | 10 mm |
| 1,5 Jahre | 1 | 11 mm |

Die Bestimmung der Fließnote und der Schüttkegelhöhe erfolgt nach den folgenden Methoden:

### Fließfähigkeit mittels Glasauslaufgefäßen

Für die gleichmäßige Entleerung eines Pulversilos und exaktes Dosieren des Pulvers ist ein gutes Fließverhalten (des jeweiligen Pulvers) Voraussetzung. Schlecht rieselfähige Pulver fließen nicht oder nur durch Auslaufgefäße mit sehr großer Auslauföffnung, daher erhalten gut rieselfähige Pulver eine niedrige Benotung.

### Prüfgeräte:

Meßgefäß 1 = 2,5 mm Durchmesser
Meßgefäß 3 = 5,0 mm Durchmesser
Meßgefäß 3 = 8,0 mm Durchmesser
Meßgefäß 4 = 12,0 mm Durchmesser
Meßgefäß 5 = 18,0 mm Durchmesser

Herstellung durch: Henz, Schulstr. 18, 63549 Ronneburg.

### Durchführung

Beginnend mit Meßgefäß 5 wird das Auslaufgefäß auf ein Blatt Wägepapier gestellt und mittels eines zweiten, als Trichter dienenden Wägepapiers bis zur Oberkante mit dem zu prüfenden Pulver gefüllt. Durch vorsichtiges Hochheben wird die Öffnung freigegeben, so daß das Pulver ausfließen kann. Fließt das Pulver durch ein Gefäß aus, so wird das nächstkleinere Gefäß verwendet und die o. a. Prozedur wiederholt.

### Auswertung

| **Note** | **Beurteilung** |
|---|---|
| 1 | Pulver fließt frei aus Gefäß Nr. 1 aus |
| 2 | Pulver fließt frei aus Gefäß Nr. 2 aus |
| 3 | Pulver fließt frei aus Gefäß Nr. 3 aus |
| 4 | Pulver fließt frei aus Gefäß Nr. 4 aus |
| 5 | Pulver fließt frei aus Gefäß Nr. 5 aus |
| 6 | Pulver fließt nicht aus Gefäß Nr. 5 aus |

### Fließfähigkeit mittels Schüttkegelhöhe

Für die gleichmäßige Entleerung eines Pulversilos und exaktes Dosieren des Pulvers ist ein gutes Fließverhalten des jeweiligen Pulvers Voraussetzung. Ein gutes Beurteilungskriterium für das Fließverhalten ist der Schüttwinkel. Da die Schüttkegelhöhe bei gleichem Basismaß in direkter Abhängigkeit zum Schüttwinkel steht und wesentlich einfacher zu bestimmen ist, wird diese bestimmt. Gut rieselfähige Pulver haben eine niedrige Schüttkegelhöhe.

### Prüfgeräte

Metallsieb (1 mm)
Höhenreißer
Metallvollzylinder, d = 50 mm, h = 80 mm
Schaber

### Durchführung

Das Drahtsieb wird an dem Stativ in ca. 10 cm Abstand über dem Metallvollzylinder befestigt. Zur Einstellung der endgültigen Höhe des Siebes wird das voraussichtlich schlechteste Pulver langsam auf das Sieb geschüttet und mittels Schaber vorsichtig durch das Sieb passiert. Der Abstand des Siebes von der Schüttkegelspitze des Pulvers wird auf 2 cm eingestellt. Diese Höhe wird bei allen weiteren Vergleichsprüfungen eingehalten. Ist der Schüttkegel des Pulvers gleichmäßig geformt, so ist die Siebung des Pulvers beendet und die Schüttkegelhöhe wird mit dem Höhenreißer an der Spitze des Kegels abgelesen.

### Auswertung:

Die Schüttkegelhöhe wird in mm angegeben.

## Patentansprüche

1. Verfahren zur Herstellung eines Wirkstoffkonzentrates,
**dadurch gekennzeichnet,**
**dass** man zuerst eine Masterbatch-Suspension mit einem Gehalt an 10 bis 15 Gew.-% hydrophober Siliciumdioxid-Variante und 85 bis 90 Gew.-% an 70 bis 80 %iger wässriger Wirkstofflösung durch Mischen der Bestandteile bis zur Phasenumkehr herstellt, und diese Masterbatch-Suspension anschließend mittels einer bekannten Vorrichtung sprühtrocknet.

2. Verfahren nach Anspruch 1,
**dadurch gekennzeichnet,**
**dass** die Masterbatch-Suspension vor der Sprühtrocknung mit Wasser oder weiterer wässriger Wirkstofflösung verdünnt wird.

3. Verfahren nach Anspruch 1 oder 2,
**dadurch gekennzeichnet,**
**dass** der Wirkstoff eine hygroskopische Substanz aus dem Lebensmittelbereich oder Futtermittelbereich ist.

4. Verfahren nach Anspruch 1 oder 2,
**dadurch gekennzeichnet,**
**dass** der Wirkstoff Cholinchlorid, hydrolysiertes Pflanzenprotein oder Eisensulfat ist.

## Claims

1. A process for preparing an active substance concentrate, **characterized in that** a masterbatch suspension having a content of from 10 to 15% by weight of hydrophobic silicon dioxide variant and from 85 to 90% by weight of from 70 to 80% strength aqueous active substance solution is first prepared by mixing the constituents until phase reversal, and this masterbatch suspension is then spray-dried using a known apparatus.

2. A process according to claim 1, **characterized in that**, before the spray drying, the masterbatch suspension is diluted with water or further aqueous active substance solution.

3. A process according to either of claims 1 and 2, **characterized in that** the active substance is a hygroscopic substance from the food sector or feed sector.

4. A process according to either of claims 1 and 2, **characterized in that** the active substance is choline chloride, hydrolysed vegetable protein, or iron sulphate.

## Revendications

1. Procédé de production d'un concentré de principe actif,
**caractérisé en ce qu'**
on prépare en premier lieu une suspension de lot principal (Master-batch) ayant une teneur en 10 à 15 % en poids de variante de dioxyde de silicium hydrophobe et de 85 à 90 % en poids en solution de principe actif aqueux à 70 à 80 %, par mélange des constituants jusqu'à inversion de phase et on sèche ensuite par vaporisation cette suspension de lot principal à l'aide d'un dispositif connu.

2. Procédé selon la revendication 1,
**caractérisé en ce que**
la suspension de lot principal est diluée avant le séchage par vaporisation, avec de l'eau ou avec une solution de principe actif, aqueuse, supplémentaire.

3. Procédé selon la revendication 1 ou 2,
**caractérisé en ce que**
le principe actif est une substance hygroscopique choisie dans le domaine alimentaire ou le domaine des aliments pour le bétail.

4. Procédé selon la revendication 1 ou 2,
**caractérisé en ce que**
le principe actif est du chlorure de choline une protéine végétale hydrolysée ou du sulfate de fer.
